(19) **Europäisches Patentamt**

**European Patent Office**

**Office européen des brevets**

(11) **EP 1 273 889 A1**

(12) **EUROPEAN PATENT APPLICATION**

(43) Date of publication:
**08.01.2003 Bulletin 2003/02**

(51) Int Cl.⁷: **G01D 5/165**, F02D 11/10

(21) Application number: **01305724.5**

(22) Date of filing: **02.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **CTS Corporation**
**Elkhart, Indiana 46514-1899 (US)**

(72) Inventors:
• **Sharkey, Thomas Paul**
**Gourock PA19 1EA (GB)**

• **Stewart, David**
**Edinburgh, EH11 1EQ (GB)**

(74) Representative: **Loven, Keith James**
**Loven & Co**
**Quantum House**
**30 Tentercroft Street**
**Lincoln LN5 7DB (GB)**

(54) **Rotational sensor**

(57)     A rotational sensor is taught that utilises a drive plate (30) and a rotor (20) coupled by an energiser spring (40) to provide the physical connection between the input shaft (12) and the sensor (10). The energiser spring (40) allows the sensor (10) to absorb radial and axial vibrations without producing erratic outputs. The sensor further provides an easy assembly package that simplifies the indexing process in installation.

FIG. 1

## Description

## FIELD OF THE INVENTION

This invention relates to rotary position sensors, and more particularly to sensors having housing structures that attach to a pedal assembly for an automobile.

## BACKGROUND OF THE INVENTION

Automobiles traditionally utilise mechanical linkages such as cables, pneumatic or hydraulic connections between the driver and the associated systems for controlling the operation. For example, using a mechanical linkage, the operator presses the accelerator pedal and the linkage causes a throttle valve to rotate to increase the flow of fuel and air and thus increase the speed of the vehicle. While the user interface is well defined, the exact mechanism for translating the operator's action of depressing the accelerator pedal into the mechanical action that speeds the vehicle is not critical to the operator.

Electronic controls have become increasingly popular for automobiles. The electronic controls are able to gather information regarding the operating condition of the automobile and adjust the performance characteristics to maximise the efficiency and performance. Early electronic controls had limited ability to control various aspects of the engine. However, electronic controls have gained acceptance and authority over additional aspects of the automobile's systems. With this additional control, the original mechanical linkages between the operator and the automobile system are no longer required; an electrical or electronic sensor can provide an indication of the operator's control actions (for example, depressing the accelerator pedal) to the control which can than take appropriate action.

A rotational sensor can be provided on a brake or accelerator pedal in the automobile to provide an indication of the operator's actions. As the pedal is depressed, the rotational sensor can provide an electrical indication of the position of the pedal. The electrical signal can be provided to the electronic control with only electrical connections, or possibly via a data bus provided in the automobile.

Rotational sensors have been used previously in a number of applications. These sensors typically include a wiper that carries an electrical contact. The sensors also include a material with a resistor screened on it. As the wiper moves along the resistor, the output resistance is varied. This variation in the output resistance can be measured to provide an indication of the position of the pedal.

The prior sensors were not ideal, however, in that the harsh environments of an automobile include environmental vibrations. In a typical sensor design, the wiper arm is directly connected to the input shaft of the sensor. Thus, any vibrations applied to the shaft (for example, the accelerator pedal), are transmitted directly to the sensor output. Additionally, this vibration will cause undue wear over the life of the sensor and can eventually cause a premature failure.

A second difficulty with prior sensors is found in their method for indexing. The installation of a sensor typically involves rotating the pedal to a specific position such as full accelerator application. The sensor is then rotated to a position providing an output corresponding to this mechanical position. The sensor is then attached to the pedal in this position. This leads to difficulties in ensuring a consistent installation and mounting of the sensor.

## SUMMARY OF THE INVENTION

According to the invention, a rotational sensor comprises a housing and a movable assembly formed to be rotatably carried by the housing and capable of receiving a rotating input shaft, the movable assembly further comprising a drive plate for carrying the shaft, a rotor capable of carrying the drive plate, and an energiser, wherein the energiser secures the drive plate to the rotor.

A rotational sensor is taught that provides an electrical output corresponding to the physical position of a rotatable shaft. The sensor also includes a mechanism to allow easy indexing and absorbs environmental vibrations. Additionally, the sensor is provided with a mounting mechanism that aids in the ease of assembly and provides a consistent output after installation.

The invention also incorporates the method of assembling a rotational sensor, comprising the steps of:

  providing a drive plate formed to receive a shaft;
  providing a rotor capable of loosely carrying a drive plate;
  providing an energiser including a spring force;
  engaging the drive plate to the rotor;
  holding the drive plate in place against the rotor using the spring force of the energiser;
  providing a housing; and
  rotatably mounting the drive plate, rotor and energiser to the housing.

In a further embodiment, the energiser is provided to absorb axial and radial movement to prevent unwanted vibration to a sensor. In a further embodiment, the sensor is mounted to the shaft by locating the housing assembly over the shaft and pressing the drive plate into engagement with the shaft.

The invention also provides a pedal assembly for use in an automobile, comprising:

  a pedal formed to be pressed by a foot;
  a shaft fixedly attached to the pedal;
  a sensor housing;

a drive plate capable of being press fit onto the shaft;

a rotor formed to carry the drive plate;

an energiser mounted to the drive plate and the rotor for firmly securing the drive plate to the rotor in a rotational direction, but allowing some movement in the radial and axial directions;

a housing formed to rotatably carry the drive plate, rotor and energiser;

a contactor mounted to the rotor;

a substrate including an electrically resistive material mounted in the housing; and

an electrical connector mounted to the housing;

and wherein the contactor physically engages the resistive material as the shaft is rotated, and the resistive material is electrically interconnected to the electrical connector.

## BRIEF DESCRIPTION OF THE DRAWINGS

In the Figures, which illustrate an exemplary embodiment of the invention:

Figure 1 is a diagrammatic view of an accelerator pedal having a sensor of the present invention mounted thereto;

Figure 2 is an exploded view of the present invention;

Figure 3 is an exploded view of the movable assembly of the present invention;

Figure 4 is a top view of the movable assembly of the present invention;

Figure 5 is a sectional view of the movable assembly taken along lines A—A of Figure 4 prior to indexing;

Figure 6 is a sectional view of the present sensor taken along lines A—A of Figure 4 after indexing;

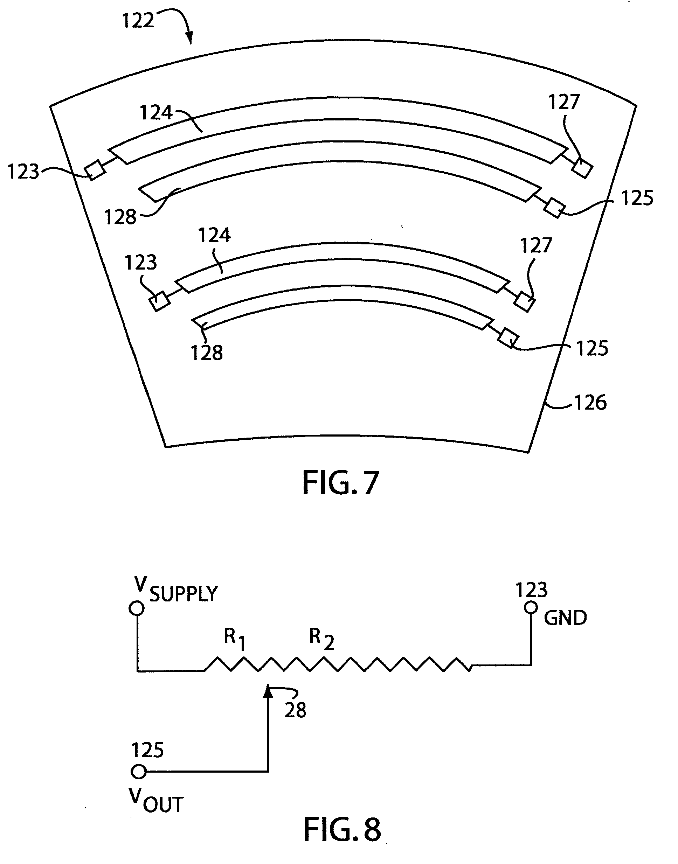

Figure 7 is a resistor card of the present invention; and

Figure 8 is an electrical schematic of the present invention.

It should be noted that the drawings are not to scale.

## DETAILED DESCRIPTION OF THE ILLUSTRATED EMBODIMENT

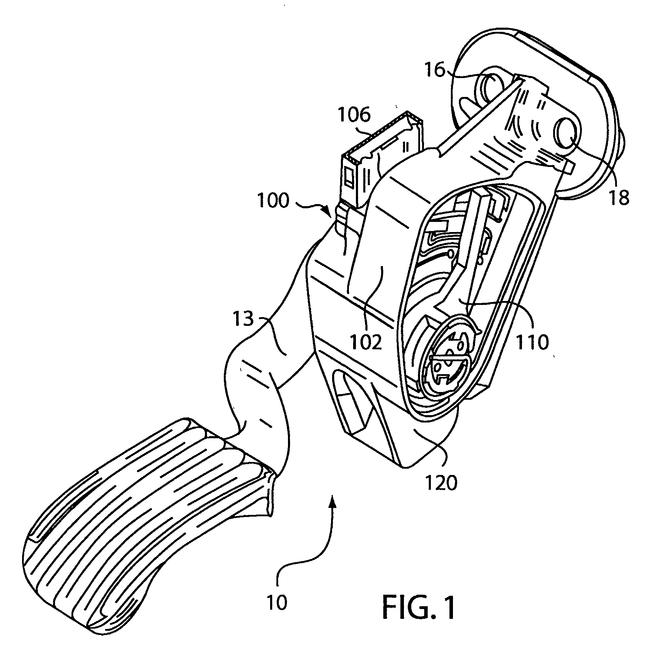

A rotational sensor 10 is shown in Figure 1. Sensor 10 receives a rotatable shaft 12 in recess 14. Sensor 10 includes screw locators 16,18 for receiving fasteners (not shown) for attaching sensor 10 to the vehicle. Shaft 12 is attached to an accelerator pedal 13 in the present embodiment, but could also be any rotating body such as a throttle shaft or a brake pedal.

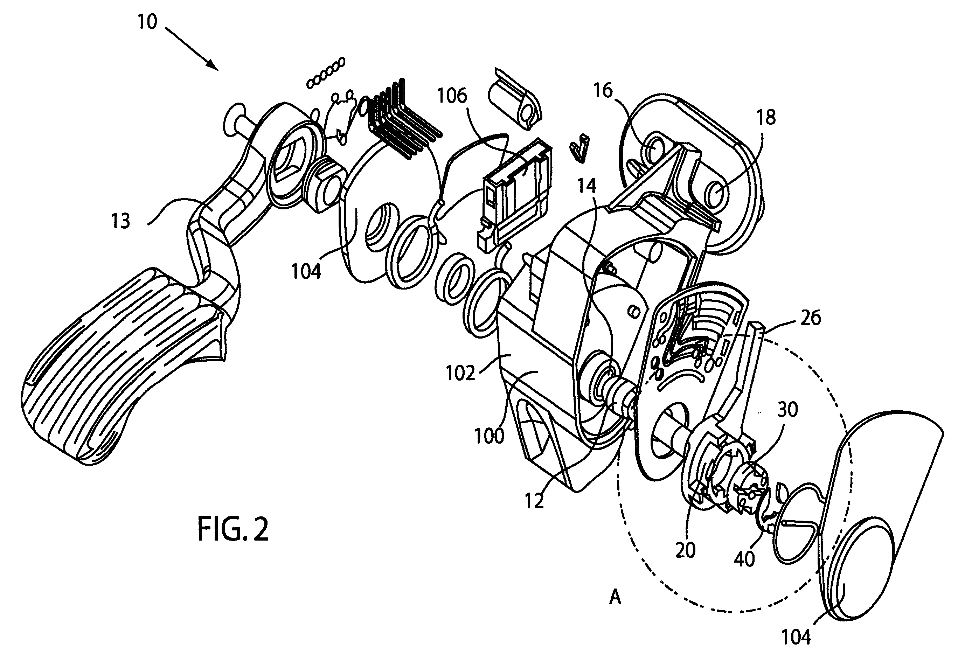

Sensor 10 includes a housing 100 formed of a moulded plastic material. Housing 100 comprises a body 102 and a cover 104. Housing 100 also includes an electrical connector 106 to provide electrical communication with an electronic control. The sensor 10 further comprises a movable assembly 110 and a stationary assembly 120 as is best shown in the exploded view of Figure 2. The stationary assembly includes a resistor card 122. Resistor card 122 is a ceramic substrate or flexible polyamide material capable of receiving thick film resistive materials. Thick film resistive materials are coatings or paints that can be applied to a substrate to form an electrical resistor. The resistor card used in the preferred embodiment provides a dual output by having two independent traces for outputs. The two outputs function similarly and thus will be described with reference to a single trace. Thick film resistor 124 is formed along the substrate 126. Located adjacent to thick film resistor 124 is a conductive trace 128. Output pads 123,125,127 are provided and are interconnected with the resistor 124 and conductive trace 128. The output pads 123,125,127 are electrically connected to output connector 106 on the housing 100. The pads are provided for a voltage supply pad 127, a ground pad 123 and a voltage output pad 125.

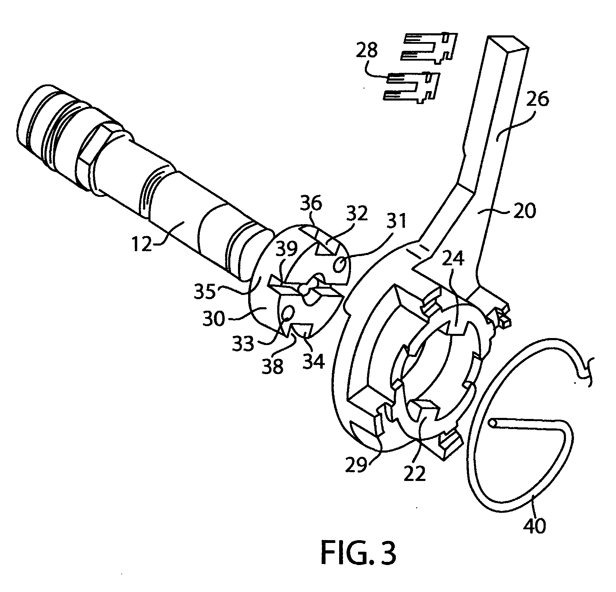

The movable assembly 110 includes a rotor 20, drive plate 30 and an energiser 40 as best shown in Figure 3. The drive plate 30 includes locating slots 32,34 located opposite each other. These are formed to mate with locating tabs 22,24 on rotor 20. The locating slots 32,34 extend through most of the body of the drive plate 30, but include a barrier 36,38 along the rear portion 35 of the drive plate 30. The drive plate 30 can be assembled onto the rotor 20 from the rear side 25, but can not pass completely through the rotor 20 because the barriers 36,38 engage the locating tabs 22,24. The drive plate 30 further includes an energiser slot 39 running across the width of the drive plate 30 in a line perpendicular to a line formed between the locating slots 32,34. The drive plate also includes indexing guides 31,33 which are used in the indexing process as discussed below.

The rotor 20 includes an arm 26 which carries contactors or wipers 28. The contactors 28 are formed to be heat staked into the arm 26 of the rotor 20. Contactors are preferably flexible and made of a conductive material. Ideally, the contactors will be formed to wipe across the thick film resistor 124 without causing surface damage to the resistor 124. The rotor includes energiser tabs 29 which are sized to hold the energiser 40.

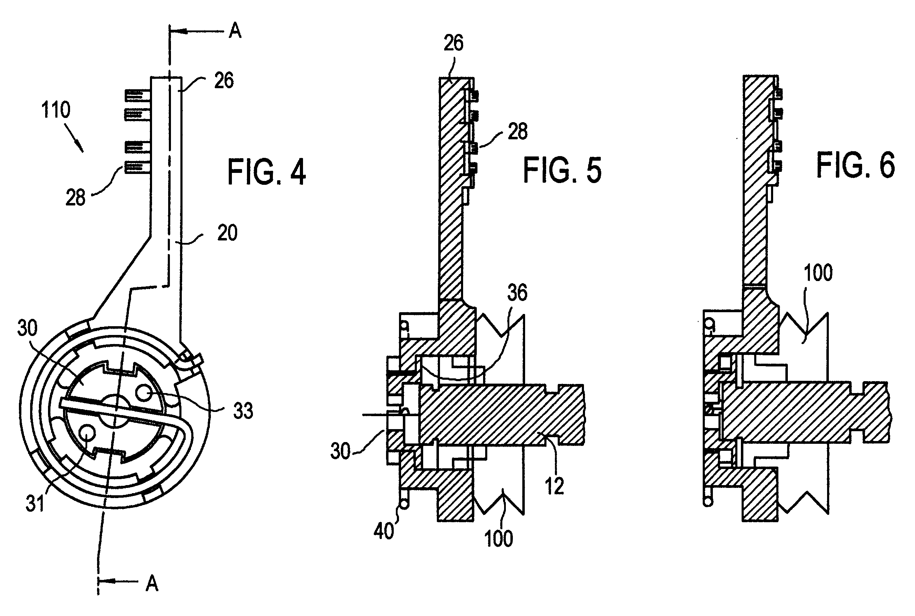

The electrical circuit formed by the contactors 28 and the thick film resistor 124 is shown in Figure 6. At an initial point, close to the supply voltage $V_{supply}$ input 127, the output voltage $V_{out}$ measured at output contact 125 will be close to $V_{supply}$. As the contactors 28 move over towards the ground contact 123, $V_{out}$ will decay towards 0 volts. The circuit works as a voltage divider with the resistor 124 split by contactors 28 into $R_1$ and $R_2$. The sum of $R_1$ and $R_2$ is the total resistance of the resistor 124. The output voltage, $V_{out}$, will vary ac-

cording to the equation:

$$V_{out} = \frac{R_2 \, V_{supply}}{R_1 + R_2}$$

The output voltage $V_{out}$ thus varies as the contactors 28 move across the resistor 124 in a predictable fashion. Since the total resistance of $R_1 + R_2$ and $V_{supply}$ are known, the relative position of the contactors 28 can be gauged via this calculation. This provides the analogue indication of the pedal position.

Turning now to the assembly process, a drive plate 30 is inserted into the rotor 20. The energiser 40 is next inserted into the energiser tabs 29 on the rotor 20 and the energiser slot 39 on the drive plate 30. The energiser 40 provides a spring force that engages the drive plate 30 rotationally into engagement with the rotor 20. This allows the tolerances of the drive plate 30 and the rotor 20 to be relatively loose as any gaps are compensated for by the spring force in engagement. The energiser 40 also allows the drive plate 30 to have some movement relative to the rotor 20 both axially and radially.

The contactors 28 are heat staked into the arm 26 of the rotor 20. The rotor 20 and drive plate 30 assembly are next inserted into the housing 100 carrying the resistor card 122. The housing 100 allows the rotor 20 to rotate relative to the housing 100. The sensor 10 is then supplied to a pedal component manufacturer or automotive assembly company for final assembly.

The sensor 10 can be assembled onto the shaft of the pedal. A meter is attached to the connector 106 of the sensor 10 to provide a measurement of the output voltage $V_{out}$. In order to ensure consistency among the sensors in their final assembly, the output is set according to a given mechanical position of the rotational shaft 12. In this way, if a particular vehicle has tolerances that allow the pedal position to vary slightly, the output voltage $V_{out}$ should remain consistent from vehicle to vehicle based on this indexing. The indexing is accomplished by moving the pedal to a predetermined mechanical position representing a particular operational parameter. For example, in an accelerator application the mechanical position could correspond to maximum travel or full application of the throttle. Once the accelerator pedal shaft is rotated to this position, the sensor 10 is placed loosely over the shaft 12 as shown in Figure 5. An indexing tool can be used to grab the indexing guides 31,33 and rotate the drive plate 30 and rotor 20 relative to the housing 100 until a desired output voltage $V_{out}$ is achieved. At this point, the sensor 10 is pushed onto the shaft, causing the shaft and drive plate 30 to lock in an interference fit. This locked position is shown in Figure 6. At this point, rotational movement of the shaft will cause the drive plate 30 to rotate, carrying the rotor 20 and causing the contactors 28 to move across the resistor card 122. This will in turn provide a varying output which can be measured by an electronic control. Because of the mechanical connection between the drive plate 30 and the rotor 20, vibrations in the shaft along the axial and radial axis are absorbed by the energiser 40, preventing erratic signals and undue wear of the sensor 10.

In an alternative embodiment, electronics could be included in the sensor housing 100. The electronics could receive an input voltage from the electrical connector 106 and include signal conditioning circuitry to provide a higher voltage output. The electronics could additional include an analogue to digital converter, allowing the sensor to provide a digital position indication. This could further include a data bus interface that would allow the sensor 10 to communicate with the electronic control (not shown). In this manner, it would be possible for many sensor assemblies to communicate with the electronic control over a single pair of wires.

The described embodiments are to be considered in all respects only as illustrative and not restrictive.

**Claims**

1. A rotational sensor, comprising a housing and a movable assembly formed to be rotatably carried by the housing and capable of receiving a rotating input shaft, the movable assembly further comprising a drive plate for carrying the shaft, a rotor capable of carrying the drive plate, and an energiser, wherein the energiser secures the drive plate to the rotor.

2. A rotational sensor according to Claim 1, further comprising a resistor card carrying an electrically resistive material.

3. A rotational sensor according to Claim 2, further comprising an arm carried by the rotor, the arm having an electrically conductive contactor mounted thereto, wherein the contactor moves across the resistive material in response to rotation of the shaft.

4. A rotational sensor according to Claim 2 or 3, comprising an electrical connector mounted to the housing, the resistor card being electrically connected to the connector.

5. A rotational sensor according to Claim 4, comprising an electric signal conditioning circuit mounted in the housing and providing a conditioned output signal to the electrical connector.

6. A rotational sensor according to Claim 4 or 5, comprising analogue to digital conversion circuitry mounted in the housing and providing a digital output to the connector.

**7.** A rotational sensor according to any preceding claim, wherein the energiser is a spring.

**8.** A rotational sensor according to Claim 7, wherein the energiser secures the drive plate to the rotor to transfer relative rotational movement, but does not transfer axial or radial movement.

**9.** A rotational sensor according to any preceding claim, comprising locating tabs formed on the rotor, and locating slots corresponding to the locating tabs formed in the drive plate, the locating tabs and locating slots loosely engaging to assemble the drive plate to the rotor.

**10.** A rotational sensor according to any preceding claim, wherein the drive plate includes a bearing surface formed to be capable of carrying the shaft through an interference fit.

**11.** A method of assembling a rotational sensor comprising the steps of:

> providing a drive plate formed to receive a shaft;
> providing a rotor capable of loosely carrying a drive plate;
> providing an energiser including a spring force;
> engaging the drive plate to the rotor;
> holding the drive plate in place against the rotor using the spring force of the energiser;
> providing a housing; and
> rotatably mounting the drive plate, rotor and energiser to the housing.

**12.** A method according to Claim 11, further comprising:

> providing an electrically resistive material mounted to a substrate;
> mounting the substrate to the housing; and
> providing contactors mounted on the rotor and in physical contact with the electrically resistive material.

**13.** A method according to Claim 11 or 12, further comprising mounting an electrical connector to the housing.

**14.** A method according to Claim 13, further comprising electrically interconnecting the electrical connector and the resistive material.

**15.** A pedal assembly for use in an automobile, comprising:

> a pedal formed to be pressed by a foot;
> a shaft fixedly attached to the pedal;
> a sensor housing;

a drive plate capable of being press fit onto the shaft;
a rotor formed to carry the drive plate;
an energiser mounted to the drive plate and the rotor for firmly securing the drive plate to the rotor in a rotational direction, but allowing some movement in the radial and axial directions;
a housing formed to rotatably carry the drive plate, rotor and energiser;
a contactor mounted to the rotor;
a substrate including an electrically resistive material mounted in the housing; and
an electrical connector mounted to the housing;

and wherein the contactor physically engages the resistive material as the shaft is rotated, and the resistive material is electrically interconnected to the electrical connector.

FIG. 1

FIG. 2

FIG. 3

FIG. 6

FIG. 5

FIG. 4

122

124
127
123
128
125
124
123
127
128
125
126

FIG.7

$V_{SUPPLY}$

123
GND

$R_1$    $R_2$

28

125

$V_{OUT}$

FIG.8

**European Patent Office**

# EUROPEAN SEARCH REPORT

Application Number

EP 01 30 5724

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 999 373 A (CONTELEC AG) 10 May 2000 (2000-05-10) * the whole document * | 1,2,7,8, 10-12 | G01D5/165 F02D11/10 |
| Y |  | 3,4,12, 13,15 | |
| Y | US 5 438 516 A (NEUBAUER KEITH A ET AL) 1 August 1995 (1995-08-01) * column 4, line 14 - column 6, line 58; figures 1-4 * | 4,5,12, 13,15 | |
| Y | GB 2 173 955 A (CRYSTALATE ELECTRONICS) 22 October 1986 (1986-10-22) * page 3, line 76 - line 82; figure 3 * | 3 | |
| Y | US 5 481 141 A (BROWN RICHARD L ET AL) 2 January 1996 (1996-01-02) * claim 9 * | 5 | |
|  |  |  | TECHNICAL FIELDS SEARCHED (Int.Cl.7) |
|  |  |  | G01D F02D |

The present search report has been drawn up for all claims

| Place of search | Date of completion of the search | Examiner |
|---|---|---|
| THE HAGUE | 13 December 2001 | Chapple, I |

## ANNEX TO THE EUROPEAN SEARCH REPORT
## ON EUROPEAN PATENT APPLICATION NO.

EP 01 30 5724

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2001

| Patent document cited in search report | | Publication date | Patent family member(s) | | Publication date |
|---|---|---|---|---|---|
| EP 0999373 | A | 10-05-2000 | DE 19851330 A1 | | 11-05-2000 |
| | | | EP 0999373 A1 | | 10-05-2000 |
| US 5438516 | A | 01-08-1995 | NONE | | |
| GB 2173955 | A | 22-10-1986 | EP 0202764 A2 | | 26-11-1986 |
| US 5481141 | A | 02-01-1996 | NONE | | |

EPO FORM P0459

For more details about this annex : see Official Journal of the European Patent Office, No. 12/82